# EUROPEAN PATENT APPLICATION

(11) **EP 1 260 828 A2**
(43) Date of publication of application: **27.11.2002**
(21) Application number: 02253687.4
(22) Date of filing: 24.05.2002
(51) Int. Cl.: G01S 3/786, G01S 3/781

(54) **System for tracking an object**

(30) Priority: 24.05.2001 CA 2348212
(71) Applicant: Acoustic Positioning Research Inc., Edmonton, Alberta T6G 1E5 (CA)
(72) Inventor: Bauer, Will, Edmonton, Alberta T6G 2A4 (CA); Lozano-Hemmer, Rafael, Montreal, Quebec H2L 3M7 (CA)
(74) Representative: Grey, Ian Michael

(57) **Abstract**

A system and method for automatically tracking objects of interest and aiming or pointing a device capable of pan/tilt movement at the objects as they move in real-time. The system also provides the capability to gather, in real-time or non-real time, information to calculate the position and orientation in three dimensions of the aiming or pointing device. The position and orientation information is characterized by three positional coordinates (x,y,z) and three angular orientation coordinates (Theta, Gamma, and Phi) for a total of six degrees of freedom or 6DOF.

## Description

### FIELD OF THE INVENTION

The present invention relates to a system and method for automatically tracking objects of interest and aiming or pointing a device capable of pan/tilt movement at the objects as they move in real-time. It also relates to a system with the ability to gather, in real or non-real time, information sufficient to calculate the aiming/pointing device's position and orientation in three dimensions, the position and orientation being characterized by three positional coordinates (X,Y,Z) and three angular orientation coordinates (theta, gamma, and phi) for a total of six degrees of freedom (6DOF).

### BACKGROUND OF THE INVENTION

A variety of devices have been developed for automatically tracking targets of interest and aiming or pointing devices capable of pan/tilt movement at the targets as they move in real-time.

There are known devices based on mechanically moving a narrow beam-width optical sensor to scan a region of solid angular width searching for a light-emitting target. Such devices suffer mechanical limitations derived from the need to mechanically move the sensor to scan a solid angular region which limits the tracking device in a number of important ways such as the requirement for separate pan and tilt angle tracking sensors, the inability to selectively track a variety of differently coded sensors and switch between them in real-time, plus a relatively low number of position measurements per second.

Other known devices are based on sophisticated analog video signal processing and differentiate based on impregnating objects with compounds which have spectrally unique optical emission characteristics and optical filtering to identify the objects. These devices suffer from the need for sophisticated video signal processing equipment and from the fact that the only provision for selectively tracking more than one object is based on spectral differentiation via optical filters - something which is difficult to practically achieve for more than a small number of objects without significantly complex equipment. Furthermore, spectral differentiation of trackers is particularly problematic in concert/performance situations where constantly changing coloured lighting is in use.

Similarly, other tracking devices function via use of reflected laser light passing through a narrow-band optical filter and falling onto a four-quadrant detector. These devices require a high-powered laser and can only produce two bits of aiming information (telling the targeting system at which of the four quadrants to point). Such imprecision results in a jerky aiming movement since only four pointing choices are available for any momentary position.

In other known tracking devices, participants who are either carrying infrared LED trackers or wearing recognizable colours which have been recorded via a complex calibration process are automatically tracked. Such systems suffer from extreme complexity of hardware and concomitant costs, high complexity of use, and sensitivity to environmental adversities such as artificial fog in a performance setting.

In summary, known devices typically suffer from the following problems and shortcomings:

Prior devices do not provide coding of infrared (IR) pulses to allow differentiation of multiple trackers present from one another and no real-time selective control over which tracker is followed.

Some known devices require the mounting of CCD cameras on moving platforms which are panable and tiltable. Because of this, these systems are far more complex due to the need for extremely accurate feedback control between the imaging system and the pan/tilt motors. This feedback is necessitated because to perform the calculations of where the device is pointing, it is essential to know at what angle of pan/tilt the CCD camera was at the precise instant that the CCD image was acquired. Such a design choice demands a great deal of complexity in both hardware and software to compensate for the fact that the CCD camera is moving instead of static.

Due to the need for closely coupled feedback between the pan/tilt motors and the imaging and position calculation subsystems, such systems cannot be easily installed on existing pointable Pan/Tilt devices or PPTD's.

To eliminate sources of optical noise, some known systems rely on synchronizing the flashing of the tracking LED to the 1/60 second frame-rate of the CCD video camera. This synchronization is carried out using a radio signal to transmit the starting time of each of the CCD camera's frame acquisition sequences as they occur. This radio transmission greatly increases system complexity by requiring that the camera unit and the tracker LED be equipped with radio gear. Further, this approach limits the number of position measurements per second to thirty since every other frame is "dark" to allow for the subtraction of successive frames by the video processing sub-system.

Initial calibration for many known tracking devices is required each time the devices are used. This calibration must be performed by a trained operator for angle calibrations of the motor control, for light/camera positions in the case where lights and cameras are separately mounted, and also for keying in colour recognition parameters for the object/person being tracked.

In known devices, there is no provision for external control by other systems or for sharing control dynamically between the tracking system and an external controller. There is also no provision for prediction of tracker motion to allow lights to "lead" a moving tracker to avoid lagging behind due to unavoidable delays in acquisition of tracking data and the motor movement inertia of the PPTD.

There is no provision in known devices for the calculation of arbitrary 6DOF position/orientation information for each light. There is no provision in prior devices for coping with situations where the lights are not mounted with the three rotational orientation angles identical with the camera. In practice, such mounting alignment is very difficult to achieve and systems not capable of dealing with such issues have very limited utility. Further the need for determining the position/orientation of the light relative to the camera system removes the possibility that the system can respond to real-time changes in light position caused by, for example, moving light trusses.

None of the known devices adequately address the determination of 6DOF position/orientation. In a typical best case, the PPTD must be pointed at each of the calibration points to record calibration pan/tilt angles for the PPTD, and this pointing/recording must be done for each calibration point, resulting in a time consuming process of controlling and moving the PPTD to point exactly at the center of each calibration mark. Additionally, this process must be repeated for each PPTD for which 6DOF information is desired, resulting in extremely lengthy calibration procedures when multiple PPTD's are being utilized in one environment. Further, it is difficult or nearly impossible to perform this process in real-time either after a PPTD platform has been moved to a new location during a show or while the PPTD is continuously moving (for example, when a moving lighting truss or moving prop to which the PPTD platform is affixed is used during a concert).

### BRIEF SUMMARY OF THE INVENTION

The present invention provides a system and technique for automatically pointing devices having computer controllable pan/tilt heads such as robotic lights and/or cameras which address the shortcomings of these aforementioned approaches.

The present invention provides a tracking/pointing system which is suitable for use in adverse environments such as theatre/night-club/performance venues where fog and other lighting is present allows smooth and precise following of any one of many different trackers at high numbers of angular position measurements per second and allows the ability to switch which tracker is being followed dynamically with no appreciable changeover delay.

The present invention makes it possible to shorten the 6DOF position/orientation calculation process, allowing the needed angles to be assessed by automatically analyzing images of the calculation points, to allow gathering of this data to proceed in parallel for a virtually unlimited number of PPTD's, each PPTD being equipped with its own mechanism and, further, to allow this calculation information to be gathered in real-time to allow for recalculation in cases where the entire PPTD platform is moved between either set positions or continuously during a show.

In one aspect, the present invention comprises a digital imaging system (DIS) that resides at or near the centre of the pan/tilt axes of the pointable pan/tilt device (PPTD) being controlled. The digital imaging system is coupled to a digital image processing engine (DIPE) which analyzes the digitized image to find the location of a light emitting diode (LED) in each successive image frame and an input/output control engine (IOCE) which accepts input parameters such as which of a number of trackers present should be followed, tracking smoothness, position prediction algorithm parameters, etc. and also generates as output pan/tilt control signals for the PPTD based on the processing done by the DIPE plus internally generated behaviours such as dimming of the light when the tracker is lost from view, etc. These control signals can be any suitable protocol such as DMX-512, Ethernet/ACN, TCP/IP or UDP packets, RS-232/422/485 or other suitable protocols.

The system images a flashing LED connected to each object of interest, processes the digital image thus created to identify the centroid or brightest pixel of the image corresponding to the LED, and generates control signals to direct the PPTD to point at the LED. The LED is attached to a tracker controller (TC) which includes a battery and a microcontroller chip along with power supplies and electronic driver circuitry for switching large momentary currents through the LED, causing it to flash brightly for short periods of time plus control buttons which allow the user some direct control of the PPTD's parameters. The control buttons instruct the microcontroller to alter the coding of the flashing LED to convey information from the TC to the IOCE.

According to another aspect of the invention, the DIS is statically mounted (i.e. not mounted on the moving part(s) of the PPTD). The advantage of this mounting is that feedback problems are minimized or avoided with regard to the motors which control the pointing of the PPTD.

In a first aspect, the present invention provides a system for tracking an object of interest and controlling a pointing device capable of pan/tilt movement at the object of interest, said system comprises: an emitter module coupled to the object of interest, said emitter module being adapted to emit a pulsed light output; an imaging module, said imaging module being coupled to the pointing device, said imaging module including an image acquisition component, said image acquisition component being responsive to the pulsed light output of said emitter module for acquiring images of said pulsed light output; an image processing module, said image processing module including a controller for processing the images acquired by said imaging module, and said controller further including a component for generating control signals derived from said acquired images for controlling the pan and tilt movement of the pointing device to track the object of interest.

In a second aspect, the present invention provides a system for tracking an object of interest and controlling a pointing device capable of pan/tilt movement at the object of interest, said system comprises: an emitter module coupled to the object of interest, said emitter module being adapted to emit a pulsed light output; an imaging module, said imaging module being coupled to the pointing device, said imaging module including an image acquisition component, said image acquisition component being responsive to the pulsed light output of said emitter module for acquiring images of said pulsed light output, and said imaging module being coupled to a stationary portion of said pointing device, and remains stationary in relation to the pan and tilt movement of said pointing device; an image processing module, said image processing module including a controller for processing the images acquired by said imaging module, and said controller further including a component for generating control signals derived from said acquired images for controlling the pan and tilt movement of the pointing device to track the object of interest; and an external controller for making position and orientation determinations for the pointing device, said position and orientation determinations comprising three positional coordinates and three angular orientation coordinates, wherein said external controller includes an input component coupled to an output port on the controller, and an output component coupled to an input port on the controller, said output component providing control signals to said controller for acquiring position and orientation data for the pointing device, and said input component receiving the acquired position and orientation data for making said position and orientation determinations associated with the pointing device.

Other aspects and features of the present invention will become apparent to those ordinarily skilled in the art upon review of the following description of specific embodiments of the invention in conjunction with the accompanying figures.

### BRIEF DESCRIPTION OF THE DRAWINGS

Reference is now made, by way of example, to the accompanying drawings, which show an embodiment of the present invention, and in which:
Fig, 1 is a block diagram of a system according to the present invention;
Fig. 2 is a more detailed block diagram showing more of the functional modules of the system;
Fig. 3 shows one possible set of control connections needed to gather data for 6DOF calibration; and
Fig. 4 shows in schematic form a pointable pan/tilt device (PPTD) with the digital imaging system (DIS) according to the present invention.

### DETAILED DESCRIPTION OF THE PREFERRED EMBODIMENTS

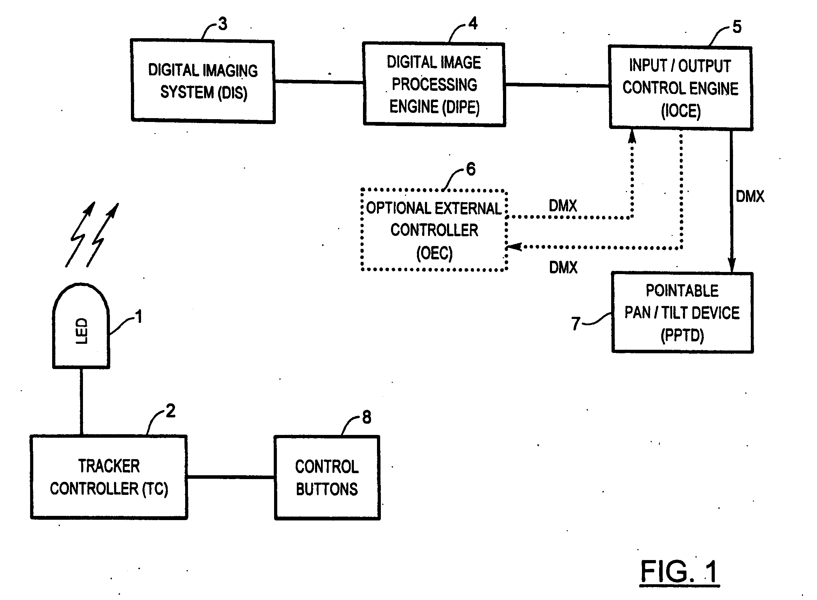

Reference is first made to Fig. 1 which shows in block diagram form a system according to the present invention. The system comprises a tracker controller (TC) 2 and a digital imaging system (DIS) 3. The tracking controller 2 is attached or carried by the object to be tracked, for example, a performer in a stage production. The digital imaging system (DIS) 3 is mounted on a pointable pan/tilt device (PPTD) 7 and receives signals emitted by a LED 1 coupled to the tracking controller 2. As shown, the tracker controller 2 includes the LED 1 and a control button panel 8. The digital imaging system (DIS) 3 is coupled to a digital image processing engine (DIPE) 4 which is coupled to an Input/Output Control Engine (IOCE) 5. The input/output control engine 5 is coupled to the pointable pan/tilt device 7 and an optional external controller (OEC) 6 as described in more detail below.

Without loss of generality, only one LED 1 and tracker controller 2 pair are shown but it is understood that many LED/TC pairs might be present in the field of view of the digital imaging system DIS 3 at any given moment. Further, it is understood that the LED 1 may comprise of several physical LED's mounted, for example, on the front and back of an object of interest to be tracked, e.g. a performer or mounted together to increase the effective brightness and/or angle of dispersion.

The LED 1 flashes a coded series of pulses generated by the tracker controller 2. This flash code is normally a code which can be synchronized by the digital image processing engine DIPE 4 to allow the LED/TC to be uniquely identified in cases where there is more than one LED/TC present in the field of view of the digital imaging system 3. The set of control buttons 8 allow the wearer of the tracker controller 2 to control the brightness or lamp on/off status of the robotic light (if a robotic light is being used as the pointable pan/tilt device 7) or other desirable parameters germane to the particular pointable pan/tilt device 7 in use. When the buttons are pressed, the tracker controller 2 senses their status and alters either the flash coding of the LED 1 or the LED's brightness (or a combination of the two) so that the button status is communicated from the tracker controller 2 to the input/output control engine 5 via the flashing and/or brightness of the LED 1. This coding is readily apparent to one with ordinary skill in the art and will not be elaborated upon further.

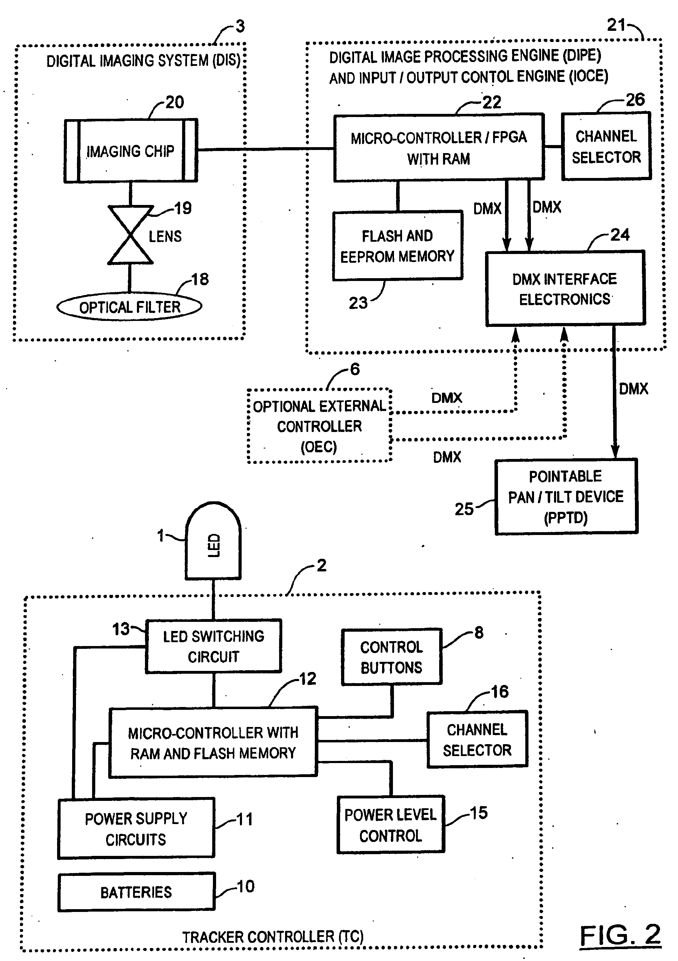

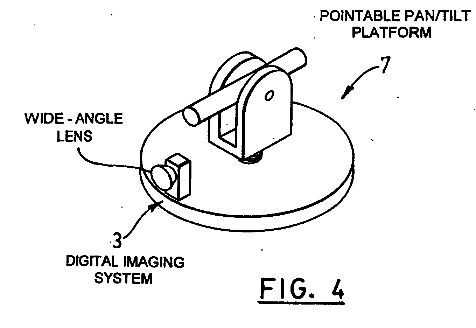

The flashing of the LED 1 is observed by the digital imaging system 3 which is mounted on each of the pointable pan/tilt devices 7 as shown in Fig. 4. The digital imaging system 3 converts the image into electronic form, i.e. digitizes, and transfers it to the digital image processing engine 4 where it is processed to identify areas of brightness and corrected for lens distortion. Following this processing, the likely location of the LED 1 is identified via an algorithm which looks for the brightest point or centroid closest to the last known location of the LED 1. This location within the image field is given in terms of its angular deviations from the centre of the image of the digital imaging system 3. Correcting these deviations (using the factory-measured alignment differences between the digital imaging system 3 and the pointable pan/tilt device 7) yields the pan angle and tilt angle of displacement which are the angles at which it is necessary to point the pointable pan/tilt device 7 in order to have the pointable pan/tilt device pointing collinearly with the LED 1 and therefore the object of interest. The input/output control engine 5 issues control signals to the pointable pan/tilt device 7 based on this information, on optional external control signals coming from the optional external controller 6, and from its own internally programmed behaviours. These behaviours can be enabled and disabled via commands sent from the optional external controller 6. In Figures 1 and 2 these control signals are indicated as DMX-512 lighting control serial data protocol but there is no reason why other control protocols such as Ethemet/ACN, TCP/IP, UDP, RS-232, RS-422/485 et al. could not be similarly employed, such a choice being decided by the nature of the pointable pan/tilt device 7 as will be within the understanding of one skilled in the art.

It will be appreciated that the optional external controller 6 is an optional component and is not required to make the system track and point correctly. The principle use of the optional external controller 6 is to acquire data for 6DOF (6 degrees of freedom) calculation of the position/orientation for the pointable pan/tilt device 7, facilitate real-time changes in which tracker controller 2 is being tracked, enable or disable the automatic tracking capability afforded by this system, or to change other desirable parameters of the pointable pan/tilt device 7 (such as, for example light colour, in the case where the pointable pan/tilt device 7 comprises a robotic light). The control signals issued by the input/output control engine 5 convey information to the pointable pan/tilt device 7 about its real-time state. If there are external signals from the optional external controller 6, they are passed through by the input/output control engine 6 without alteration except for the case of pan/tilt information in which case the input/output control engine 6 replaces any pan/tilt information from the optional external controller 6 provided that tracking is enabled (which is done by sending a particular control code from the optional external controller 6 to the input/output control engine 5), If tracking is disabled (also done by sending a specific control code from the optional external controller 6 to the input/output control engine 5) the pan/tilt information is passed through unchanged from the optional external controller 6 to the pointable pan/tilt device 7.

If there is no optional external controller 6 present, the input/output control engine 5 defaults to always controlling the pan/tilt of the pointable pan/tilt device 7 unless a control code has been sent from the tracker controller 2 to disable it. Similarly, the input/output control engine 6 will replace incoming data when its internal behaviours have been activated. For example, in the case where the pointable pan/tilt device 7 is a robotic light, if behaviour for dimming the light when the tracker controller 2 is lost has been activated (by sending a control code from the optional external controller 6 to the input/output control engine 5) the input/output control engine 5 will ignore incoming dimmer information from the optional external controller 6 when the tracker controller 2 is lost, instead sending its own dimmer commands to the light.

It will be appreciated that the DMX control chain accessible by the optional external controller 6 may be extended to more than one pointable pan/tilt device 7 equipped with a system according to the present invention. Many such devices may be daisy chained together on one DMX link and controlled from the optional external controller 6 while operating autonomously when their pan/tilt tracking and other behaviours are activated by the optional external controller 6 sending appropriate control commands on the appropriate DMX channels.

As shown in Fig. 4 the pointable pan/tilt device 7 may comprise any suitable pan/tilt controllable device. Particular examples include robotic lights such as those used in night-clubs and other performance venues, as well as motorized cameras, but it will be appreciated that other types of devices may be used.

To remove the need for post-factory calibration, the digital imaging system 3 is mounted close to the centre of the pan/tilt axis of the pointable pan/tilt device 7 (Fig. 4) at a standard fixed distance close enough to give a good "depth of field" to the tracking. Typically, the distance is less than thirty centimeters but the exact acceptable value depends on the intended usage of the pointable pan/tilt device 7 as will be within understanding of one skilled in the art. Mounting at a fixed distance via a bracket or other mount on the chassis of the pointable pan/tilt device 7 itself ensures that calibration can be done once at the pointable pan/tilt device 7 factory. There are two parts to this calibration: the first is to measure the alignment offset of 3D orientation angles between the "zero" position of the pointable pan/tilt device 7 and the centre of the image of the digital imaging system 3. Ideally, alignment of the digital imaging system 3 will bring it into an orientation where the axes about which its three spatial orientation angles (pan, tilt, and rotation) are measured will be parallel to those of the pointable pan/tilt device 7. Thus there will be an X, Y, Z displacement between the centre of the imaging element for the digital imaging system 3 and the pan/tilt axis centre of the pointable pan/tilt device 7 along with minimal orientation angle differences. Given a mechanical mounting of reasonable accuracy, a close approximation of this ideal case can be made by real-life mountings. If greater accuracy is needed, it is possible to use the aforementioned 6DOF calculation algorithms to determine the position of the digital imaging system 3 and orientation relative to the pointable pan/tilt device 7.

The second calibration measurement involves measuring the pan/tilt offset angles necessary for the pointable pan/tilt device 7 to intersect a point lying along the pan/tilt image axis centre of the digital imaging system 3 at a reasonable distance from the pointable pan/tilt device 7 and digital imaging system 3. This is required because, since the pointable pan/tilt device 7 and digital imaging system 3 are not sharing the same X, Y, Z spatial location, they will each generate a sight line along their respective pan/tilt centres and these two lines will always intersect at only one point (if at all). The use of the offsets sets where this intersection should be and results in a certain "depth-of-field" radial distance range over which the pointable pan/tilt device 7 pointing is accurate enough. As the digital imaging system 3 and pointable pan/tilt device 7 are mounted closer and closer together, this depth of field increases. As mentioned previously, in the case where the pointable pan/tilt device 7 is a robotic light, a distance of 30 cm can be considered "reasonably close".

It will be appreciated that in addition to the ease-of-use implementation described above, a "professional" version of the system in which the digital imaging system 3 is rigged and calibrated by knowledgeable users is provided as another embodiment of the system.

Reference is made to Fig. 2, which provides a more detailed view of the components comprising the system. As shown in Fig. 2, the digital imaging system 3 comprises an optical high-pass or band-pass filter 18, a lens 19, and an imaging chip 20 such as the PB-0300-CCM.

The digital image processing engine 4 and the input/output control engine 5 may be implemented together in a module indicated by reference 21 in Fig. 2 using a combined micro-controller/FPGA logic gate array with RAM memory 22 such as the Atmel FPSLIC AT94K family of devices. These devices include a micro-controller, random access memory ("RAM") for storing the micro-controller's firmware and data, and a custom programmable gate array all on one chip. This provides the capability to implement the functionality of the digital image processing engine 4 and the input/output control engine 5 in two or three chips. The other chips being an optional "flash programmable" memory chip for look-up table storage and an electrically erasable "EEprom" chip 23 for permanent firmware storage and bootstrap loading on power-up. The low-level image processing from the DIS 17 is handled in hardware with the FPGA logic as is the DMX control of the functionality of the input/output control engine. Identifying trackers by their flashing sequences, the mapping of optical position into pan/tilt angles, and linear/non-linear/Kalman prediction is best handled in firmware using the micro-controller. While it is desirable to integrate functionality in this manner, it will be appreciated that the system may also be realized using separate components. A set of Channel Selector 26 switches is connected directly to the micro-controller 22. These allow setting the "channel" of LED flashing onto which the digital image processing engine 4 will lock as well as specifying which DMX channel address will be the "base channel" of the system for control by the optional external controller 2. A DMX interface electronics module 24 provides voltage level shifting and buffering to the DMX-512 signals involved. As mentioned above, DMX is used only by way of example, and other communications protocols may be employed.

The tracker controller 2 includes batteries 10 which provide energy to power supply circuits 11 which generate appropriate voltages for a LED switching circuit 13 which drives the LED 1 and a micro-controller with RAM and flash memory 12. The control buttons 14 connect directly to the micro-controller 12 and allow modification of parameters for the pointable pan/tilt device 7 as discussed above. A power level control module 15 for selecting the power output, i.e. pulse duration, of the LED 1 is connected to the micro-controller 12. Similarly, a channel selector module 16 for the LED 1 is also connected directly to the micro-controller 12, and allows for modification of the flash sequence for the LED 1.

The optional external controller 2 allows modal control of the system's functionality, for example, enabling, disabling, calculation data gathering, via the DMX input of the digital image processing engine 21 and allows for reception of data such as 6DOF calculation data from the digital image processing engine 21.

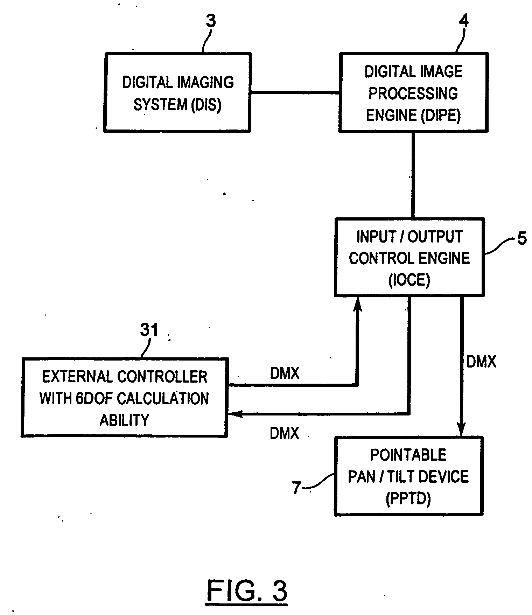

Reference is made to Fig. 3, which shows an alternate arrangement having an optional external controller with 6DOF Calculation Ability indicated by reference 31 to depict a set of control connections needed to gather data for 6DOF calculation. While the connections here are shown as using the DMX-512 control protocol, it will be appreciated that other control protocols may be substituted provided they are able to convey the relevant information from the input/output control engine 5 to the external controller with 6DOF Calculation Ability 31. For the arrangement shown by Fig. 3, control signals from the external controller 31 instruct the input/output control engine 5 to gather 6DOF calculation information by finding the pan/tilt angular coordinates of the four or more (nominally five) LED's 1 relative to the centre of the digital imaging system and then correcting these coordinates using the factory calibration measurements necessary to make it seem as though the coordinates were made relative to the zero pan/tilt position of the pointable pan/tilt device 7. For accuracy, these angle measurements are given as sixteen bit (two byte) values. Since the angular pixel resolution may be one thousandth of the total field of view or more, there is too much resolution for the values to be expressed as single byte quantities. Thus there are two' bytes for each of the nominally five LED 1 measurements for a total of ten bytes.

In DMX-512 protocol, there are 512 eight bit (one byte) "channels" of data. A pointable pan/tilt device 7 is typically assigned a "base channel" and a range of channels above this base channel to which it responds. A scheme for communicating this angle measurement information is to replace the channels normally used to control the pointable pan/tilt device 7 with these values. In order to transmit ten bytes of 6DOF calculation data for the pointable pan/tilt device 7, ten DMX channels are required. The transmission of these values is initiated by the external controller 31 sending a specific value on a particular DMX channel within the range of the input/output control engine 5. The input/output control engine 5 responds by blocking transmission of this channel to the pointable pan/tilt device 7 and the external controller 31 and instead transmitting a different value indicating that the 6DOF calculation data was present and stable on other channels. The external controller 31 waits for this value to be asserted at its DMX input and then record the 6DOF calculation data channel values for use in calculating the 6DOF position/orientation of the pointable pan/tilt device 7.

Alternatively, the ten bytes of data could be sent one after another on one channel with transfers initiated by the external controller 31 sending a separate specific value on a particular DMX channel within the range of input/output control engine 5 to initiate the transmission of each byte of 6DOF calculation data. In response, the input/output control engine 5 blocks transmission of this channel to the pointable pan/tilt device 7 and the external controller 31 and instead transmits a different value indicating that the particular byte of 6DOF calculation data desired was now present and stable on the other DMX channel. The external controller 31 waits for this value to be asserted at its DMX input and then records the 6DOF calculation data channel value for the byte in question. This process is repeated until all the 6DOF calculation bytes have been transferred after which they are available for use in calculating the 6DOF position/orientation of the pointable pan/tilt device 7.

Other transfer schemes for transmitting the 6DOF calculation measurements from the input/output control engine 5 to the external controller 31 are possible, both for DMX-512 communications and for other communications protocols, as will be apparent to those skilled in the art.

It will be appreciated that the gathering of 6DOF calculation data may occur at any desired moment provided the calculation data LED's were in view. Thus 6DOF calculation could be done or redone during a performance as the pointable pan/tilt device 7 was moving or after it had been moved to a new location.

As described above, a number of pointable pan/tilt devices 7 equipped with the system according to the present invention may be daisy-chained together on one DMX link, allowing the external controller 31 to control all of them, gathering 6DOF calculation information from all of them simultaneously.

As also described above, the digital imaging system 3 is preferably statically mounted, i.e. not mounted on the moving part(s) of the pointable pan/tilt device 7. The advantage of this mounting is that feedback problems are avoided with regard to the motors which control the pointing of the pointable pan/tilt device 7. If the mounting was on a moving portion of the pointable pan/tilt device 7, that movement would influence the apparent location of the LED 1 image, necessitating complex direct feedback control of the motors controlling the pan and tilt. Additionally, with a static mounting, image processing techniques such as frame subtraction and others may be easily implemented whereas with a moving imager, their implementation is very difficult. Since the mounting is static, a wide-angle lens is utilized to be able to see enough of the area reachable by the pointable pan/tilt device 7. Lenses having fields of view between forty and one hundred eighty degrees are suitable. The distortion caused by these wide-angle lenses is corrected for by look-up tables and/or formulas contained in the digital image processing engine 4. It should be noted that for wider angular coverage, it is possible to use more than one digital imaging system 3 provided their fields of view do not overlap.

Since the imaging system resides near the centre of the pan/tilt axes of the pointable pan/tilt device 7 (Fig. 4), it has almost the same "point of view" and thus does not require any calibration beyond an initial in-factory alignment of the imaging system with the pointable pan/tilt device 7 so that the imaging system's frame of reference lies parallel to that of the pointable pan/tilt device 7. The farther the imaging system is mounted from the pointable pan/tilt device 7, the less "depth of field" (the region of space over which the system will accurately point the pointable pan/tilt device 7 at the LED 1) the system will have. Fixing the position of the imaging system relative to the pointable pan/tilt device 7 allows it to be factory calibrated and positioning the two close together (say within 30 cm of each other) allows for adequate depth of field.

The digital imaging system 3 may have a high-pass or band-pass optical filter which limits light of frequencies not emitted by the LED 1 from passing through its lens to the imaging chip although, under some conditions, it is possible to dispense with this by using image processing algorithms such as frame subtraction to remove bright spots constantly in the image. The removal of constant bright spots in the image by subtracting two or more image frames (or frame portions when one is only interested in one region of the image) combined with knowledge of the LED's flashing cycle makes this possible but for maximum immunity to spurious signals in harsh environments, the optical filter is desirable.

The digital imaging system 3 may comprise a CMOS imaging chip such as the PB-0300-CCM monochrome chip made by Photobit Corporation capable of generating digital images of 640 x 480 pixels at frame rates of 30 Hz or greater. These chips generate and digitize their images directly on-chip, resulting in less complex, less costly, and more accurate images than those previously possible with video cameras or CCD imaging chips. The imaging chip contains amplifiers, A/D converters, and all image timing, blanking, and exposure control with the result that it can be directly connected to the digital image processing engine 4 without any other interface. The required resolution of the chip depends on the desired smoothness of operation and the distance from the pointable pan/tilt device 7 at which the LED 1 is tracked. Typically, a resolution of 200 x 200 pixels to 1024 x 1024 pixels is adequate with 640 x 480 being a commonly available resolution.

There is no particular limitation on the light frequency of the LED 1 other than the annoyance of being able to see it if it lies in the visible spectrum, the desire for a narrow bandwidth if an optical band-pass filter is employed, and the sensitivity of the imaging chip to the frequency of the LED 1. Thus with the above-mentioned sensor, a range of light wavelengths between about 300 nm and 1100 nm is available. Typically, however, to avoid said annoyance, the LED 1 is typically chosen so that it emits its energy in a narrow band of the near infrared spectrum between about 700 nm and 1000 nm. The LED 1 should also be chosen to be one that emits its light over a wide beam pattern. This is to minimize problems caused by a person carrying the LED 1 turning the LED 1 away from the imaging system. If the beam pattern is not broad, this results in the disappearance of the LED's image. The LED 1 should also be capable of being pulsed at high brightness (i.e. high momentary currents) to achieve the bright, short duration, modulated pulses required by this invention. An LED 1 such as the OP-100 made by Opto Diode Corporation has a suitably wide beam angle, power output, and near-infrared frequency/bandwidth.

The effective power output of each pulse from the LED 1 is controlled by varying the duty cycle of the pulses with respect to the frame rate of the digital imaging system 3. Since the digital imaging system 3 integrates incident light over the exposure period of each image frame, pulses of very short duration relative to the frame duration result in low average power while pulses with a duration equal to or greater than the frame duration will result in maximum power level. A control button on the tracker controller 2 (Fig. 1) allows users to select the power level they wish to use, trading off visibility at a distance with battery life. Secondly, the LED 1 is pulsed on or off in a coded sequence which differentiates the LED 1 and the tracker controller 2 from other LED trackers present in the image. Using flash coding such as this allows the differentiation of a large number of LED trackers from one another. This allows the system to selectively follow any one of a large number of individual LED trackers with the capability of making decisions about which LED 1 to track "on-the-fly", something almost impossible to do when differentiation is based on the optical frequency characteristics of the LED 1. For instance, in one scene of a play it may be desirable to follow one person, in the next scene, it may be desirable to follow a totally different performer. By transmitting tracker selection information to the system via the input of the input/output control engine 5, it is possible to dynamically alter which tracker the system is following.

The position of the LED 1 observed by the digital imaging system 3 will lag behind the instantaneous "true" position with a certain delay dependent on image frame exposure times, pulse flashing sequences, and computational delays. Further, the position of the pointable pan/tilt device 7 will lag behind what it should be with a certain delay dependent upon motor behaviour and feedback response lag. For these reasons, under some conditions it may be desirable to have the digital image processing engine 4 also perform predictive processing of the observed coordinates, using their historical recent movements to predict the true "instantaneous" state or some future state. Typically either simple linear prediction calculations or Kalman digital filter algorithms are used for this sort of prediction but there is also a growing body of work on non-linear digital predictive filters which is of use. For this reason, the digital image processing engine 4 is capable of implementations of these predictive techniques and provision is made for their parameters to be communicated to the digital image processing engine 4 via the input section of the input/output control engine 5.

With regard to 6DOF calibration, the digital image processing engine 4 can also operate in a calibration mode, gathering data from a number (a minimum of four and typically five) of LED's placed in a known geometry relative to each other. These LED's can be powered with a small battery source for the short period of time necessary to gather the pan/tilt pointing data. Since the LED points are spread at a distance from each other, the digital image processing engine 4 will have no trouble discriminating between each of the LED's, even if they are not flashing (although they could be flashing, if desired). Having identified the LED centroids or brightest points, the digital image processing engine 4 can convert this into pan/tilt angular displacements from the centre of the digital imaging system 3 and the input/output control engine 5 can transmit the pan/tilt angles thus measured to an external controller which can then utilize these measurements to calculate the 6DOF position of the digital imaging system 3 which will be, for all practical purposes, the same as that of the pointable pan/tilt device 7.

The present invention may be embodied in other specific forms without departing from the spirit or essential characteristics thereof. Certain adaptations and modifications of the invention will be obvious to those skilled in the art. Therefore, the presently discussed embodiments are considered to be illustrative and not restrictive, the scope of the invention being indicated by the appended claims rather than the foregoing description, and all changes which come within the meaning and range of equivalency of the claims are therefore intended to be embraced therein.

## Claims

1. A system for tracking an object of interest and controlling a pointing device capable of pan/tilt movement at the object of interest, said system comprising an emitter module coupled to the object of interest and adapted to emit a pulsed light output, an image acquisition means coupled to the pointing device responsive to the pulsed light output of said emitter module for acquiring images of said pulsed light output, an image processing module including a controller for processing the images acquired by said imaging acquisition means, the controller including means for generating control signals derived from said acquired images for controlling the pan and tilt movement of the pointing device to track the object of interest.

2. The system as claimed in claim 1 wherein said emitter module includes an infrared light emitting device and means for modulating the infrared light emitting device, said means being adapted to modulate the infrared light emitting device to produce a coded pulsed output.

3. The system as claimed in claim 2 wherein said means for modulating includes an input device for setting control parameters, said control parameters including an output power level for said infrared light emitting device, and a pulse coding sequence for said infrared light emitting device.

4. The system as claimed in claim 3 wherein said pulse coding sequence has a frequency between 3 Hertz and 5 Kilo-Hertz.

5. The system as claimed in claim 2 wherein said image processing module includes an input device for setting control parameters associated with the pointing device.

6. The system as claimed in claim 1 wherein said imaging acquisition means is coupled to a stationary portion of said pointing device, and remains stationary in relation to the pan and tilt movement of said pointing device.

7. The system as claimed in claim 6 wherein said imaging acquisition means includes an optical filter and a lens for receiving the pulsed light output from said emitter module said optical filter having a frequency pass-band corresponding to the light output of said emitter module.

8. The system as claimed in claim 7 wherein said image acquisition means comprises a digital imaging component capable of generating a sequence of digital images of the captured pulsed light output from said emitter module.

9. The system as claimed in claim 6 wherein said controller for processing the images acquired by said imaging acquisition means comprises means for determining angular positions corresponding to the positions of said emitter module coupled to the object of interest, and said imaging acquisition means having an image field of view and said angular positions being determined relative to the centre of said image field of view.

10. The system claimed in claim 9 wherein said controller includes means for decoding a coded pulse light output from said emitter module, said coded pulse light output providing a unique identifier for the emitter module and the associated object of interest.

11. The system as claimed in claim 9 wherein said controller includes means for predicting the position of the emitter module and thereby the object of interest at a future point in time.

12. The system as claimed in claim 9 wherein said means for generating control signals includes means for controlling positioning of the pointing device to the last determined angular position of the emitter module and the object of interest, or to a predicted position for the object of interest.

13. The system as claimed in claim 9 wherein said controller includes an input for receiving control signals from an external controller, said external control signals including signals for controlling the pan and tilt movement of the pointing device.

14. The system as claimed in claim 1 or claim 6 further including an external controller for making position and orientation determinations for the pointing device, said position and orientation determinations comprising three positional coordinates and three angular orientation coordinates.

15. The system as claimed in claim 14 wherein said external controller includes an input component coupled to an output port on said controller, and an output component coupled to an input port on said controller, said output component providing control signals to said controller for acquiring position and orientation data for the pointing device, and said input component receiving the acquired position and orientation data for making said position and orientation determinations associated with the pointing device.

16. The system as claimed in claim 15 wherein said position and orientation data comprises a plurality of angular coordinates, each of said angular coordinates being derived from images acquired from a plurality of emitter modules.

17. The system as claimed in any preceding claim wherein said pointing device comprises a robotic light, said robotic light including a moving head controllable with six degrees of freedom including three positional coordinates and three angular orientation coordinates.

18. The system as claimed in any of claims 1 to 16 wherein said pointing device comprises a video camera, and said video camera being adapted for real-time pan and tilt control.

19. The system as claimed in any of claims 1 to 16 wherein said pointing device comprises a digital imaging system, said digital imaging system being operable for real-time pan and tilt control.

20. The system as claimed in any of claims 1 to 16 wherein said pointing device comprises a video camera platform adapted for real-time pan and tilt control.

21. The system as claimed in any of claims 1 to 16 wherein said pointing device comprises a digital imaging system platform, said digital imaging system platform being operable for real-time pan and tilt control.

22. The system as claimed in any preceding claim wherein said controller includes a component for generating control signals for behaviours associated with said pointing device.
